# EUROPEAN PATENT SPECIFICATION

(11) **EP 0 893 779 B1**
(45) Date of publication and mention of the grant of the patent: **18.06.2003**
(21) Application number: 97112524.0
(22) Date of filing: 22.07.1997
(51) Int. Cl.: G06K 9/20

(54) **Videoviewing device providing an automatic internet access**
Videogerät mit automatischem Internetzugang
Appareil vidéo avec accès automatique à Internet

(43) Date of publication of application: 27.01.1999
(73) Proprietor: Sony International (Europe) GmbH, 10785 Berlin (DE)
(72) Inventor: Jackson, Gregor Said, c/o Sony Int. (Europe) GMBH, 70736 Fellbach (DE); Wagner, Peter, c/o SONY INT (Europe) GMBH, 70736 Fellbach (DE)
(74) Representative: Müller, Frithjof E., Dipl.-Ing.

(56) References cited:
- EP-A- 0 569 311
- EP-A- 0 720 114
- WO-A-96/36163
- GB-A- 2 185 611

## Description

The present invention relates to a video viewing device providing the basis for an automatic internet access, a method of generating an internet address from a video signal and a method of accessing the internet with such a video viewing device.

To simplify the internet access, web browsers are known which display hypertext markup language (HTML) which is the document format for use in reading the world-wide web (WWW) system. Every HTML page of the WWW has a web address to be accessed with and includes special data links called "hyperlinks" which represent mouse-sensitive or voice-sensitive links to other HTML pages or elements of the WWW. In this way, a change from a currently accessed internet page to another Internet page can be done by simply choosing one of the hyperlinks displayed on the currently accessed internet page instead of typing in the address of the desired internet page. In this way, the PC user "surfs" from page to page through the world of the internet without recognizing different addresses of internet pages and without the need of typing in these addresses. However, when the user wants to access special pages, he has either to remember or to note down and then to type in the corresponding addresses, e.g. URL's displayed during television advertisements. Since the addresses of Internet pages can be rather long and can have a rather complicated structure, this is a ponderous method.

To simplify this, a system has been proposed according to which the internet addresses displayed on the television screen are simultaneously transmitted as VBI data signals, i.e. data signals transmitted in the vertical blanking Interval, that can be received by special television receivers. With the internet address received in this way, an easy access of the internet is facilitated. Keywords for such a system are INTERCAST. VBI DATATRANSMISSION and TELETEXT. However, to allow this system to work, the user needs to have one of those special television sets, and further, the service of providing an additional data channel on the television transmitter side has to be established.

Prior art document EP-A-O 569 311 discloses a video viewing device comprising an image memory for storing an image of a video screen display, and an extraction means for extracting textual or numeric data from an image stored in the image memory, especially a telephone number according to predetermined character templates and outputting the extracted data.

Further, similar operations as scanning only the relevant parts of a video signal are known from document EP-A-0 720 114. Finally, technical means for recognizing alphabetic characters instead of or in addition to numbers are described in documents EP-A-0 569 311, EP-A-0 720 114 and GB-A-2185611.

It is an object of the present invention to provide a video viewing device and a method of accessing a computer network which assure an easier way of accessing the internet without the need of a special video transmitter or a special service on the video transmitter side.

The solutions of this object according to the invention are defined in the Independent claims 1 and 15.

According thereto, this object is accomplished by a video viewing device, e.g. a TV-receiver, comprising an image memory for storing an Image of a video screen display, characterized by an extraction means for extracting a computer network address from an image stored in said image memory according to predetermined keywords and outputting said extracted computer network address.

In this way, a computer network address is generated by accessing a video image stored in an image memory, extracting a computer network address from this accessed video image according to predetermined keywords and outputting said extracted computer network address.

For the user of such a video viewing device that is working according to. the described method, there is no need of remembering or noting down an internet address, e.g. displayed during a commercial, since this work is automated by the video viewing device.

According to the invention, a computer network can be accessed by receiving a video signal, e.g. a broadcast signal, processing said video signal including the step of storing a video image in an image memory, extracting a computer network address from the image stored in said image memory, transmitting said extracted computer network address to a computer network access means, and accessing said computer network with said computer network access means on the basis of said transmitted computer network address.

In this way, there is further no need for the user to type in the address of a desired internet page, this address is automatically transmitted to a computer network access means after it has been extracted from the video signal.

According to another solution of the object described above, a video viewing device comprising an image memory (1) for storing an image of a video screen display is characterized in that said image memory (1) can be accessed by a computer network access means having the facilities to perform an extraction of a computer network address from an image stored in a memory.

In a preferred embodiment of the invention, the computer network address is extracted by scanning the image stored in the image memory and outputting a stream of characters that is divided into groups of characters according to words displayed in said image after the graphic image of the characters has been translated to ASCII text (OCR), searching said predetermined keywords in said output stream of characters according to keywords stored in a keyword memory, and outputting the group of characters that contains one of said predetermined keywords.

According to a further preferred embodiment of the invention, this extraction process is only performed when a character sensor has determined that the image stored in said image memory includes any characters.

In further preferred embodiments of the invention, the groups of characters output by said scanning means are spell-checked and corrected before said predetermined keywords are searched and the keyword search is conducted not only based on the image displayed on the television screen, but also based on the audio signal that corresponds to said image.

Further preferred embodiments of the video viewing devices, e.g. TV-receivers, according to the invention, the method of generating a computer network address from a video signal according to the invention and the method of accessing a computer network according to the invention are defined in the respective subclaims.

Other objects, features and advantages of the present invention will become apparent from the following description of preferred embodiments thereof taken in conjunction with the drawings, wherein:
- **Figure 1**: shows a typical process of the connection to the Internet with a television receiver according to the present invention;
- **Figure 2**: shows the overall flow of information in the system according to the invention;
- **Figure 3**: shows the flow chart of the automatic internet access according to the invention;
- **Figure 4**: shows a first example of a television receiver according to the invention:
- **Figure 5**: shows a second example of a television receiver according to the invention: and
- **Figure 6**: shows a third example of a television receiver according to the invention.

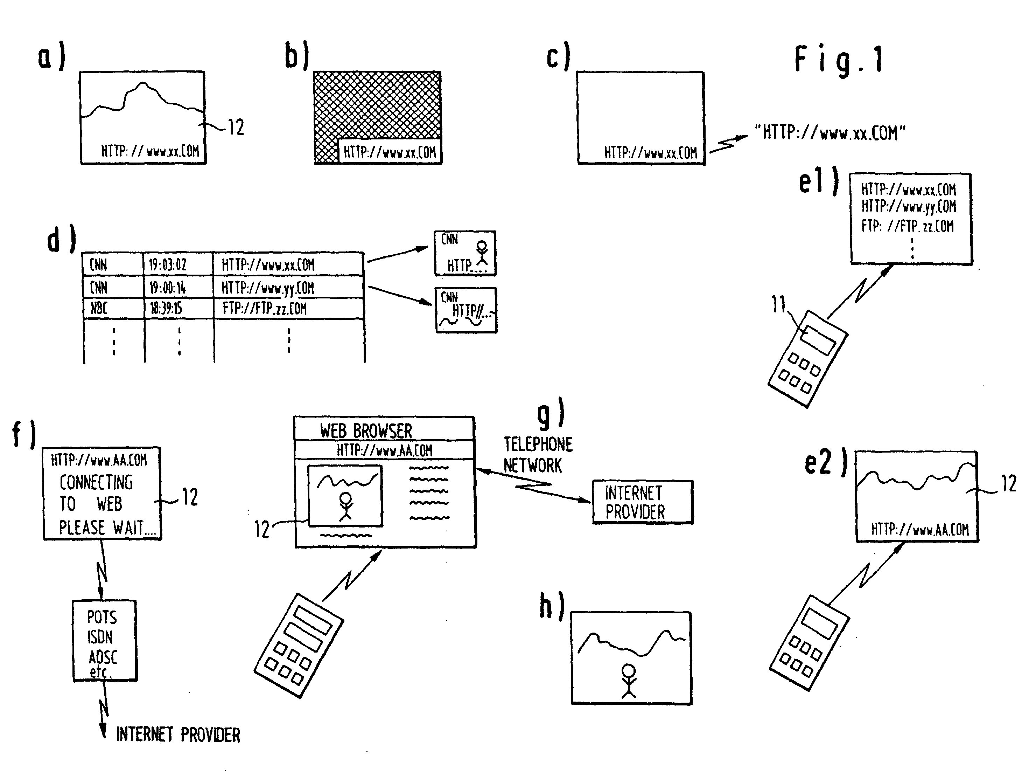

In Figure 1a, a typical TV image with a superimposed WEB address (URL) is shown. Most of today's commercials comprise superimposed WEB addresses. These addresses are recorded on the video tape or fixed on the film used to broadcast the commercial. No modifications or special arrangements, such as the set-up of a data channel, have to be conducted on the television transmitter side to transmit these superimposed web addresses, since they are a part of the transmitted picture.

The WEB addresses that are also termed URL (universal resource locator) usually start with the characters "http://www.", "ftp://www.", "http:", "ftp:" or just "www". In the middle of an URL or at the end usually one of the five general suffixes "com", "org", "net", "edu" and "int", one of those suffixes only used in the United States "mil" and "gov" or a country suffix, e.g. "de" for Germany, is present.

Figure 1b shows that only the part of an image containing characters is selected for the extraction of the URL. The rest of the image is discarded. All images displayed on a television screen 12 are processed in this way, so that it is not necessary to scan the whole contents of all displayed images. This detection can be done in the background while the user just normally watches television. In this stage, a coarse OCR (optical character recognition) technology that can be implemented either in hardware or in software is sufficient, since there is no need to properly recognize the displayed characters, but only the recognition and definition of the area used to display the characters is wanted.

Figure 1c shows that the detected characters are translated into ASCII text. In this stage, a fine OCR algorithm is needed, since the characters displayed as picture elements are translated into data elements. All further processing steps are dependent on the result detected in this stage.

If two or more groups of characters are displayed on the television screen 12, two or more corresponding data groups representing the groups of characters will be output. For further processing it is for example possible that this stage has several strings of characters as a result. Another possibility would be that the processing result is only one string of characters and the different groups of characters can be separated by e.g. a special symbol defined therefore.

Figure 1d shows an example of an ASCII table of the web-URLs recently located in the TV programme. In one line of this table, the broadcast channel is stored together with the time of displaying the internet address and the address itself as ASCII text. Optionally, a snapshot of the image displayed during the display of the internet address can be stored as well.

The address memory 8 can be organized so that only different addresses are stored, i.e. a new address to be stored is compared to the addresses already included in the memory 8 and it will get stored only if it is different to all previously stored addresses. This feature is important in a mode to recognize and store all internet addresses displayed on the TV screen automatically.

Figure 1e1 shows one possibility of the beginning of the automated internet access. Here, the user presses a predetermined "web"-button 11 on his remote control, whereafter the TV displays a listing of previously recognized web-URLs. Using his remote control, the user can choose a web page that is located on the internet and the accessing procedure will begin. Figure 1e2 displays another alternative, according to which the user can press an "instant access"-button when an internet address is displayed on the television screen 12. In this case, the television will immediately start to recognize the URL as it is shown in Figures 1b and 1c and then output the extracted internet address to an internet access means to provide a direct access to the internet or the address memory 8. This feature is important in a mode to automatically recognize only those internet addresses selected by the user.

In this case, the user can automatically and immediately connect to a desired internet page after watching the address of this page in the television.

Figure 1f shows an example of a television display 12 when the television itself has an internet access means. In this case, after having conducted one of the alternatives described in connection with Figures 1e1 and 1e2, the television gives the address of the desired internet page to an internet provide via a telephone network while displaying a user message on its screen 12 that a connection is going to be established.

Figure 1g shows how the user can now use the remote control or another device like an infrared keyboard to browse the WEB page using a TV-modified WEB browser running on the Internal video processing CPU of the television. In this case, the television screen 12 is used to display the WEB browser with the internet address and internet page currently accessed.

Figure 1h shows the television screen 12 after the user has disconnected from the internet and the television has been set back into the standard television mode.

When using ISDN (Integrated Services Data Network), the processing shown in Figures 1e2, 1f, 1g and 1h could be executed in a time interval as little as 30-45 seconds.

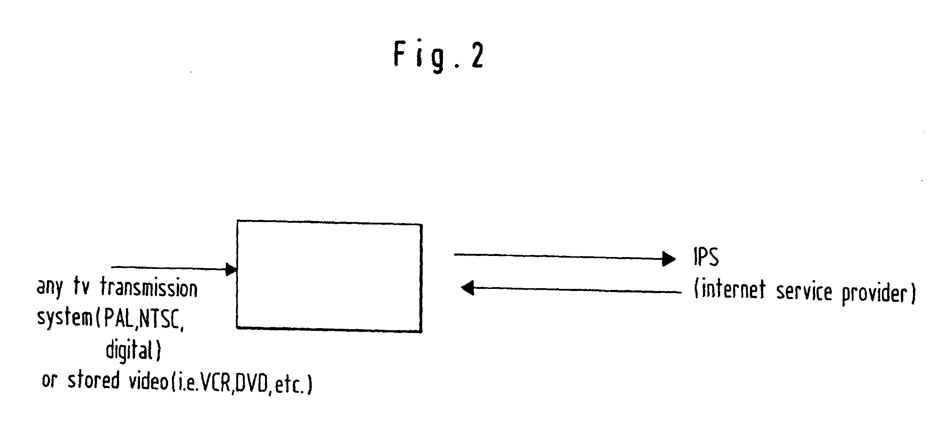

Figure 2 shows the overall flow of information in the system according to the invention. The system is receiving a television transmission in any system, e.g. PAL, NTSC, digital, or a stored-video transmission from a VCR, DVD, etc. and only based on this information, a bidirectional link with an internet service provider can be set up when desired by the user. The intelligent terminal according to the present invention needs no other information than is transmitted in a normal television system to derive the URL.

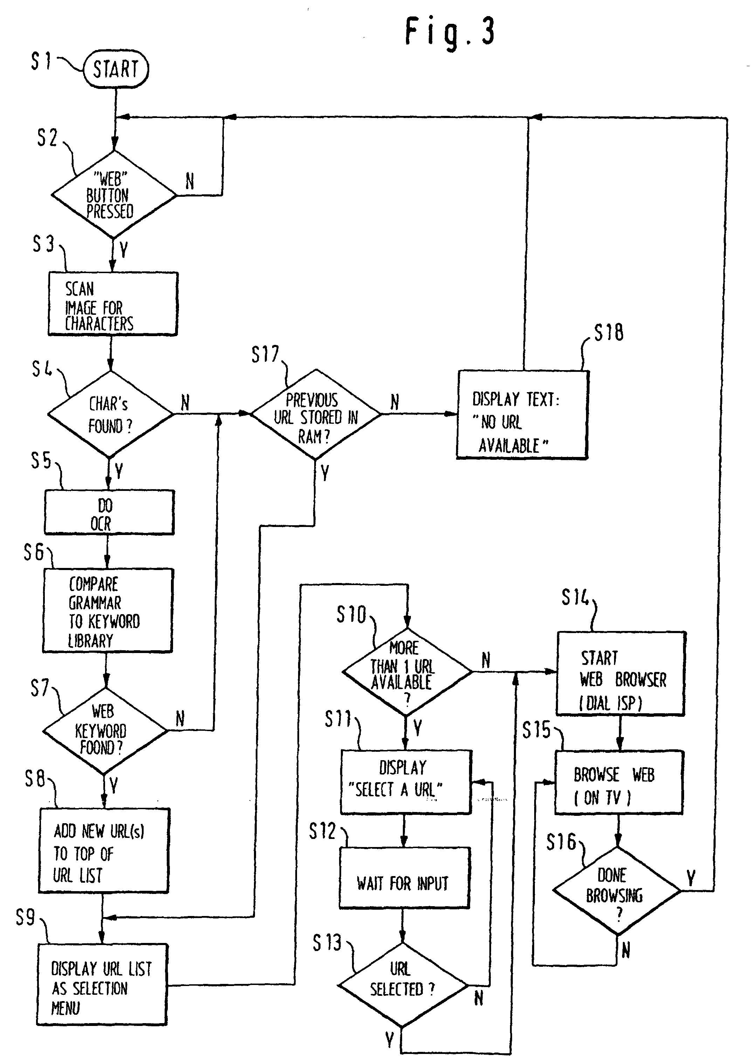

Figure 3 shows a flow chart of the automatic internet access according to another alternative of the extracting, storing, selecting and connecting process of the invention.

The process starts in step S1. Since this flow chart shows a user-interactive internet access process, the starting is only conducted every time the television receiver according to the invention is switched on, because the process itself restarts independently therefrom.

The process is then set forth in step S2 where it is determined whether the "web" button 11 of the remote control is pressed or not. If this is not the case, step S2 will be repeated. In other words, the system waits for a useraction showing that an internet connection is wanted. If the "web" button 11 has been pressed in step S2, the image stored in an image memory 1 is scanned for characters in step S3. If a mode is selected by the user that the system should extract every URL displayed, as stated above, this step S2 is skipped. The whole extraction is then conducted in the background.

In the following step S4, it is determined whether any characters have been found in step S3 or not. If no characters have been found in step S4, the process flow will be set forth with step S17 described later. If on the other hand any characters have been found in step S4, the process will be set forth in step S5 and an optical character recognition will be conducted on the image stored in image memory 1. Thereafter, the grammar received in step S5 is compared to a keywork library stored in a keyword memory 5 in step S6. In the following step S7, it is determined whether or not a WEB keyword is included in the grammar received in step S5. If this is not the case, the process flow will again proceed to step S17 described later. If it is determined that at least one keyword has been found in step S7, the process continues in step S8 in which one or more URLs that have been recognized are added to the top of the URL list. The extraction and storing of an URL selected from a TV picture by the user during a TV transmission is then completed. It is possible that the user can modify the keyword memory 5 to allow the system to extract only certain URLs and to be more flexible in the case that the structure or the contents of the URLs will change.

Thereafter, the process continues in step S9 according to which the URL list is displayed on the television screen 12 as a selection menue. In the following step S10, it is determined whether or not more than one URL are available. If only one URL is available, the process continues in a step S14 described later. If more than one URL are available, the process continues in step S11 in which the message "select a URL" is displayed on the television screen 12 together with a list of all URLs available. In the following step S12, the system waits for an input. After an input has been made, it is determined in step S13 whether an URL has been selected or not. If no URL has been selected, the process goes back into step S11. If an URL has been selected, the process continues in step S14.

In step S14, the WEB browser is started. This means that a connection to the internet service provider will be established and the internet page of either the selected or in case only one URL is available the only address will be loaded. In the following step S15, the user can browse the web on the television in accordance with the possibilities of the web browser used. In the following step S16, it is determined whether the user has finished the browsing or not. If this is not the case, the process will continue in conducting steps S15 and S16. If, on the other hand, the user has finished browsing, the process flow continues with step S2.

If in step S4 no characters have been found or in step S7 no WEB keyword has been found, the process continues in step S17 in which it is determined whether or not at least one previous URL is stored in address memory 8. If this is the case, the process continues in step S9 in which the URL list is displayed as a selection menue. If this is not the case, the message "no URL available" is displayed on the television screen 12 in step S18. From step S18, the process flow continues with step S2.

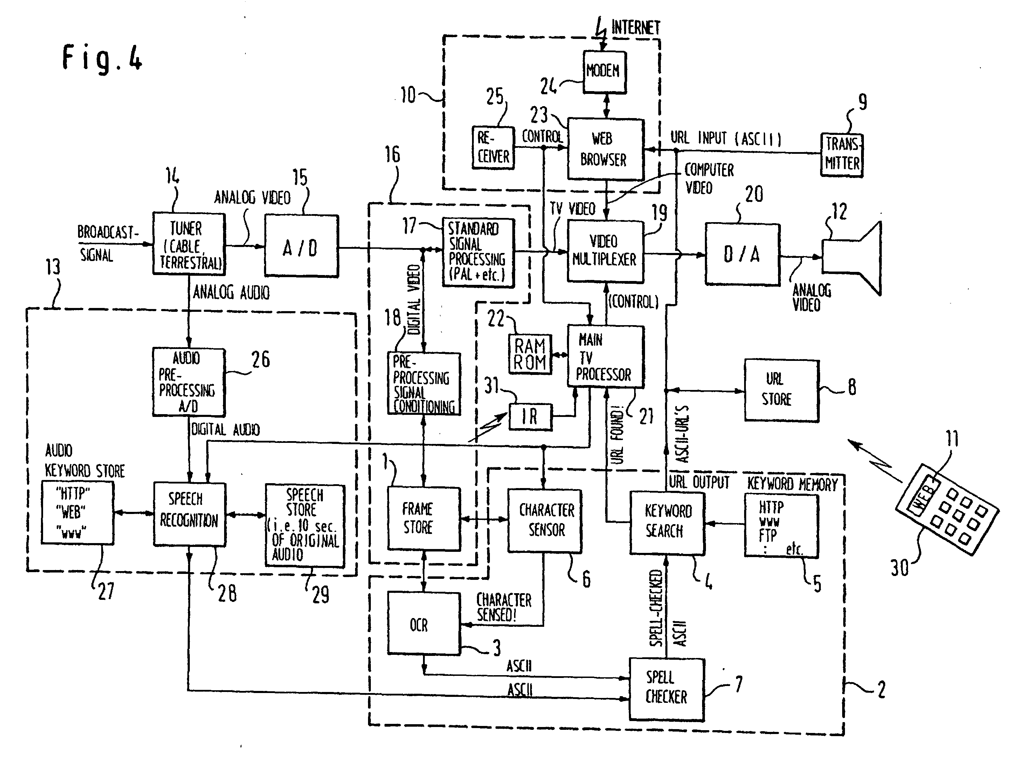

Figure 4 shows a first example of a TV-receiver according to the invention. A broadcast signal is received through an antenna or from an external video source, e.g. VCR, (not shown) by a tuner 14. The broadcast signal received by the tuner 14 is split into an analog video signal sent to an A/D converter 15 and into an analog audio signal sent to speech recognition means 13. The speech recognition means 13 are described later. This is an optional functionality to reduce the error rate of the optical character recognition also described later.

The digitized analog video signal is sent to a signal processor 16 to undergo a standard signal processing. e.g. PAL+, comb filters, etc. to produce a TV video signal that is sent to a video multiplexer 19, whereafter it undergoes a digital to analog conversion in a D/A converter 20. The analog video signal produced by the D/A converter 20 is then sent to a TV display 12.

The video multiplexer 19 is controlled by a main TV processor 21. The main TV processor 21 has a bidirectional access to a RAM/ROM unit 22 in which television channels and the overall functionality of the television are stored.

The signal processor 16 includes a standard signal processing unit 17 for conducting e.g. the PAL+ processing that has a bidirectional access to an image memory 1 via a standard preprocessing/signal-conditioning unit 18.

The tuner 14, the A/D converter 15, the signal processor 16 including the signal processing unit 17, the preprocessing/signal-conditioning unit 18 and the image memory 1, the video multiplexer 19, the D/A converter 20, the TV display 12, the main TV processor 21 and the RAM/ROM unit 22 are standard elements used in conventional television receivers. A description thereof will be omitted as far as the standard signal processing in the television receiver is concerned.

The television receiver according to the invention additionally comprises an extraction means 2 that is connected to the image memory 1 of the signal processor 16 to have an access to an image stored therein, to the main TV processor 21 to receive and transmit control signals and via an output line to an address memory 8 to store URLs, an IR transmitter 9 to transmit URLs to an external network access means or storing means and to a network access means 10. The extraction means 2 optionally receives an additional output signal from the speech recognition means 13.

The extraction means 2 comprises a character sensor 6 connected to the image memory I to have an access to an image stored therein and to the main television processor 21 to receive a control signal when to start its operation. This control signal is generated in dependency of a user command to extract a displayed URL or every frame or field of the video signal, if the mode to automatically extract all displayed URLs is selected. In the latter case it can be decidet to conduct the extraction process only every predetermined number of frames or fields, e.g. 100, since an URL will usually be displayed for a few seconds. This also saves processing power. The output signal of the character sensor 6 indicating whether any characters have been sent is fed to a scanning means 3 that is also a part of the extraction means 2. The scanning means 3 is also connected to the Image memory 1 to be able to access an image stored therein. It starts an optical character recognition process, if it receives a control signal from the character sensor 6 that is indicating that any characters have been sensed in the image stored in the frame memory 1.

Optionally the control signal is also indicating the approximate position in the image where the characters have been sensed. In this case, the scanning means 3 starts an optical character recognition process only in the area(s) indicated by the character sensor 6.

As result, the scanning means 3 outputs a stream of ASCII characters corresponding to words shown in the image stored in the image memory 1 to a spell checker 7 that is also a part of the extraction means 2. The spell checker 7 also receives an ASCII stream from the speech recognition means 13. The spell checker 7 compares both ASCII streams with a library and with each other to produce one spell-checked ASCII stream that is output to a search means 4 which has access to a keyword memory 5 to search groups of words containing one of the keywords stored in said keyword memory 5. The saerch means 4 and the keyword memory 5 are also part of the extraction means 2. If the search means 4 has found a group of words containing at least one of the keywords stored in the keyword memory 5, it outputs a control signal to the main TV processor 21 indicating that an URL has been found. Also the URL itself is output to the address memory 8, the IR transmitter 9 and the network access means 10. If wanted, the user can additionally correct, modify or type in an URL if the spell-checking should create erroneous results.

The speech recognition means 13 mentioned above has a similar function as the exctraction means 2, but an analog audio signal is searched for predetermined keywords instead of an image stored in the image memory 1. To extract an ASCII stream of word groups including the predetermined keywords, the speech recognition means 13 includes an audio preprocessing unit 26, an audio keyword memory 27, a speech recognition unit 28 and a speech memory 29. The analog audio signal received from the tuner 14 is preprocessed and A/D converted in the audio preprocessing unit 26 that outputs a digital audio signal to the speech recognition unit 28. The speech recognition unit 28 has an access to the audio keyword memory 27 to recognize word groups including special keywords. To have a better possiblity for the recognition, the speech recognition unit 28 also has an access to a speech memory 29 where it can store e.g. 10 seconds of the incoming original audio signal. After having recognized a group of words containing at least one of the keywords stored in the audio keyword memory 27, the speech recognition unit 28 produces a stream of ASCII characters and outputs it to the spell checker 7 of the extraction means 2. The speech recognition unit 28 also receives a control signal from the main TV processor 21 indicating when to start the speech recognition, as the character sensor 6 of the extraction means 2 does.

The control signals sent from the main television processor 21 to the character sensor 6 and the speech recognition unit 28 are either produced automatically by the main TV processor 21 or under control of a user. The user can press an "extract" button 11 of his remote control 30 that transmits a corresponding signal to the main TV processor 21 via an infrared sensor 31, which in turn produces the above-mentioned control signals for the character sensor 6 of the extraction means 2 and the speech recognition unit 28 of the speech recognition means 13 to start the recognition process.

The URLs output by the extraction means 2 are transmitted in ASCII formate to the address memory 8 to be stored. The IR transmitter 9 and the network access means 10 can also directly receive the transmitted URLs. Further, they can access the address memory 8 to call URLs previously stored therein. The IR transmitter 9 serves to establish a connection with an external network access means or storing means like a personal computer, a notebook, another WEB television or any like device.

The network access means 10 comprises a WEB browser 23 that can also be realized with a PC, a modem 24 to enable a communication with a computer network, i.e. the internet, and a receiver 25 through which a user can communicate with the web browser 23 and the main TV processor 21 with a not shown input/output device, e.g. an infrared keyboard. The web browser 23, the modem 24, the receiver 25 and the main television processor 21 are bidirectionally coupled. The web browser 23 delivers a computer video signal to the video multiplexer 19 so that it can be displayed on the television display 12 and control signals to the main TV processor 21.

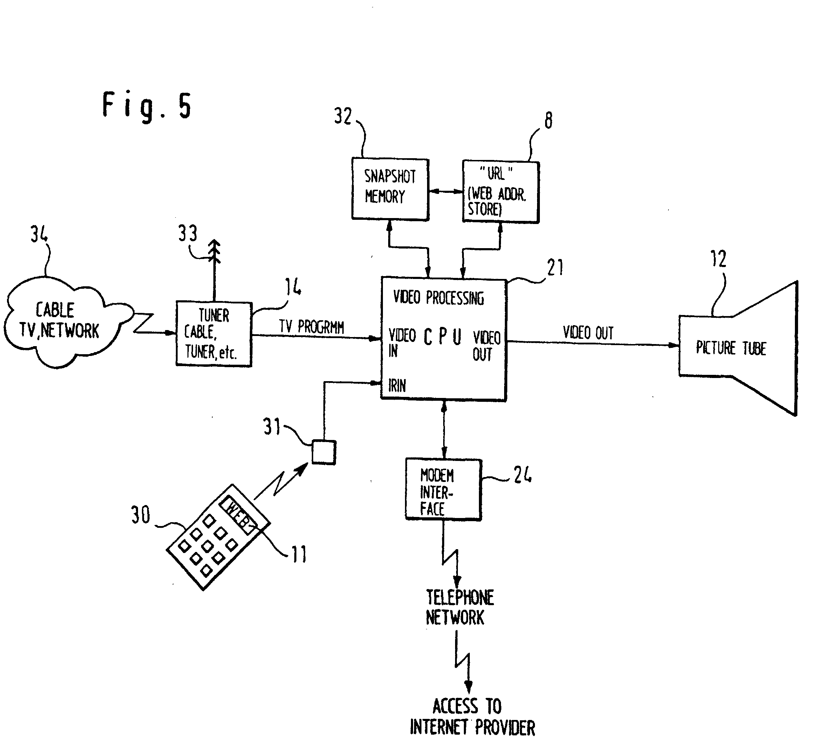

Figure 5 shows a second example of a television receiver according to the invention. In this embodiment, most of the elements shown in Figure 4 are combined in the main television processor 21 that can be seen as a video processing CPU. To the main television processor 21, there is connected a tuner 14, an infrared sensor 31, a modem interface 24, a television display 12, an address memory 8 and a snapshot memory 32. The tuner 14 of this embodiment can receive TV programmes via a TV antenna 33 or from a cable network 34, and delivers the received TV programme to a video input of the main television processor. The infrared sensor 31 of this embodiment combines the infrared sensor 31 and the receiver 25 of the first example shown in Figure 4. The snapshot memory 32 not included in the first embodiment shown in Figure 4 is bidirectionally coupled to the address memory 8 and the main television processor 21. It serves to store snapshots of pictures displayed on the television display 12 when an URL is detected. These snapshots are coupled to the corresponding URLs. The memory size needed for one snapshot is approximately 800 kByte when the image is uncompressed.

According to this embodiment of the invention, the picture shown on the television display 12 when an URL is detected is stored in the snapshot memory 32 and is displayed when the user selects one of the URLs to connect to the internet. In this way, the user can more easily recognize the wanted address to connect to when the address memory 8 holds a great number of addresses.

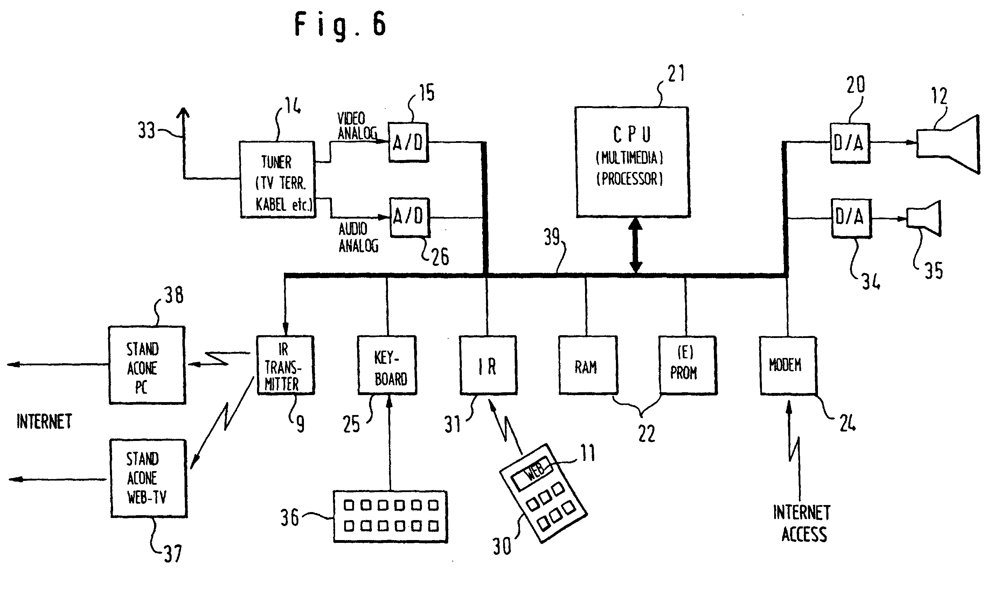

Figure 6 shows a third example of a television receiver according to the invention. According to this embodiment, most of the elements of the first embodiment shown in Figure 4 are connected to a CPU bus 39 that enables a bidirectional communication inbetween the elements. All elements of the first embodiment shown in Figure 4 that are not shown in this embodiment are included in the main television processor 21 of this embodiment.

According to this embodiment, a television signal received through the antenna 33 is split into an analog video signal and an analog audio signal by the tuner 14. These analog signals are digitized by A/D converters 15 and 26 and supplied to the CPU bus 39. The main television processor has an access to the CPU bus 39 and processes the signals before sending them to the D/A converter 20 for the video signal so that a picture will be displayed on the television display 12 and to a D/A converter 34 for the audio signal so that the audio signal corresponding to the image displayed on the television display 12 can be heard through speakers 35. Also the IR transmitter 9 to transmit the recognized URLs to e.g. a stand alone PC 38 or a stand alone WEB television 37, both having a connection to the internet, the receiver 25 for e.g. a keyboard 36, the IR sensor 31 for the remote control 30, the RAM/ROM unit 22 and the modem 24 to give an internet access are connected to the CPU bus 39.

This CPU bus 39 allows also that other elements can be connected thereto to establish a bidirectional communication with the other devices.

All the embodiments shown in Figures 4 to 6 can work in the same way to extract URLs from television pictures displayed on the television display 12 that are stored in an image memory 1 of the television receiver. Also all embodiments comprise an optional speech recognition means 13. According to the invention, the speech recognition means 13 is not necessarily needed, but an optional functionality. The speech recognition means 13, the extraction means 2 and parts of the network access means 10 may be included in the main television processor 21, as shown in the second and third embodiments. It is also feasible that the main television processor 21 will additionally include functions shown as separate blocks in the diagrams of Figures 4 to 6.

Although the above embodiments describe how to extract addresses of world wide web pages or other internet addresses, it is self evident that also e-mail addresses or any other type of computer network addresses can be extracted.

Further, it is possible that the TV-receiver itself comprises none of the functions to extract and process an URL from the TV signal, but enables a PC or a like device to have a direct access to the image memory (1), e.g. via a CPU bus 39. In this case all processing necessary to automatically extract the URL can be conducted within the PC that may also be an external device.

## Claims

1. Video viewing device, comprising:
an image memory (1) for storing an image of a video screen display;
an extraction means (2) for extracting a computer network address from an image stored in said image memory according to predetermined keywords and outputting said extracted computer network address,
an address memory (8) for storing at least one of said extracted computer network addresses output by said extraction means (2), a still picture memory (32) for storing said image of the video screen display corresponding to said at least one extracted computer network addresses output by said extraction means (2) and stored in said address memory (8) and a data structure coupling said computer network address stored in said address memory to the corresponding image stored in said still picture memory.

2. Video viewing device according to claim 1, **characterized in that** said extraction means (2) comprises a character sensor (6) for recognizing if the image stored in said image memory (1) comprises any characters and for outputting a signal indicating if the image contains characters.

3. Video viewing device according to claim 1 or 2, **characterized in that** said extraction means (2) comprises:
a scanning means (3) for scanning said image stored in said image memory (1) and outputting a stream of characters that is divided into groups of characters;
a search means (4) for searching said predetermined keywords in said stream of characters output by said scanning means (3) and outputting the group of characters that contains one of said predetermined keywords;
a keyword memory (5) for storing said predetermined keywords being accessable by said search means (4).

4. Video viewing device according to claim 3, **characterized in that** said extraction means (2) comprises a spell checker (7) to check and correct said stream of characters output by said scanning means (3) before it reaches said search means (4).

5. Video viewing device according to claim 2 and 3 or 4, **characterized in that** said character sensor (6) is outputting a signal indicating the parts of the image containing characters and said scanning means (3) is only scanning the parts of the image indicated by said character sensor (6).

6. Video viewing device according to anyone of claims 1 to 5, **characterized by** a transmitter (9) for transmitting anyone of said extracted computer network address output by said extraction means (2), said at least one computer network address stored in said address memory (8) or said image corresponding to a computer network address stored in said still picture memory together with said computer network address to an external computer network access means or an external storing means.

7. Video viewing device according to anyone of claims 1 to 6, **characterized by** a computer network access means (10) that is connected to said extraction means (2) and/or said address memory (8) to give a computer network access to at least one of the computer network pages addressed by said addresses extracted by said extraction means (2).

8. Video viewing device according to anyone of claims 1 to 7, **characterized by** an extract button (11) with which a user can initiate the extraction process of a computer network address displayed on a TV display by the extraction means (2).

9. Video viewing device according to anyone of claims 1 to 8, **characterized by** a speech recognition means (13) that extracts word sequences according to predetermined keywords from an audio signal that corresponds to the TV image and outputs a stream of characters according to said extracted word sequences to said extraction means (2).

10. Video viewing device according to anyone of claims 1 to 9, **characterized in that** said extraction means comprises an optical character recognition unit.

11. Video viewing device according to anyone of claims 1 to 10, **characterized in that** said computer network is the internet and said predetermined keywords are "http://www", "ftp://www", "http", "ftp", "www" or other parts of internet addresses.

12. Video viewing device according to anyone of claims 1 to 11, **characterized in that** said computer network is the internet and said computer network address is an e-mail address.

13. Video viewing device according to anyone of claims 1 to 12. **characterized in that** it is a television receiver.

14. Video viewing device according to anyone of claims 1 to 13, **characterized in that** it is PC with a video-capture card.

15. Method of generating a computer network address from a video signal. comprising the following steps:
accessing an video image stored in an image memory (1);
extracting a computer network address from the accessed video image according to predetermined keywords;
outputting said extracted computer network address to an address memory (8) for storing at least one of said output extracted computer network addresses,
storing said video image stored in said image memory (9) corresponding to said output extracted computer network address in a still picture memory (32) and providing a data structure coupling said computer network address stored in said address memory to the corresponding image stored in said still picture memory.

16. Method according to claim 15, **characterized in that** said step of extracting a computer network address comprises the steps of:
sensing wether or not any characters are included in the image stored in said image memory (1); and
extracting all characters included in the stored image if any characters are included therein.

17. Method according to claim 15, **characterized in that** said step of extracting a computer network address comprises the steps of:
sensing wether or not any characters are included in the image stored in said image memory (1);
selecting only the part of the image that include characters; and
extracting all characters included in the selected parts of the stored image.

18. Method according to anyone of claims 15 to 17, **characterized in that** said step of extracting a computer network address comprises the steps of:
scanning said image stored in said image memory (1) and outputting a stream of characters that is divided into groups of characters according to words displayed in said image;
searching said predetermined keywords in said output stream of characters according to keywords stored in a keyword memory (5); and
outputting the group of characters that contains one of said predetermined keywords.

19. Method according to claim 18, **characterized in that** said step of searching predetermined keywords in said output stream of characters comprises the step of spellchecking and correcting said stream of characters.

20. Method according to anyone of claims 15 to 19, **characterized by** the following steps:
scanning the audio signal that corresponds to the video image to produce word sequences including predetermined keywords;
outputting a stream of characters according to said extracted word sequences; and
comparing said stream of characters with said computer network address extracted from the video image.

21. Method according to anyone of claims 15 to 20, **characterized in that** said computer network is the internet and said predetermined keywords are "http://www", "ftp://www", "http", "ftp", "www" or other parts of internet addresses.

22. Method according to anyone of claims 15 to 21, **characterized in that** said computer network is the internet and said computer network address is an e-mail address.

23. Method according to anyone of claims 15 to 22, **characterized in that** said video signal is a television signal.

24. Method of accessing a computer network comprising the steps of:
receiving a broadcast signal or a video signal from a store in which at least a video signal is stored;
processing said video signal including the step of storing an video image in an image memory (1);
extracting a computer network address from the image stored in said image memory (1) according to anyone of claims 15 to 23:
transmitting said extracted computer network address to a computer network access means; and
accessing said computer network with said computer network access means on the basis of said transmitted computer network address.

25. Method according to claim 24. **characterized by** the following step of:
transmitting said image corresponding to said extracted computer network address to a computer network access means.

26. Method according to anyone of claims 24 and 25, **characterized in that** said extracting of a computer network address is initiated by a useraction.

27. Method according to anyone of claims 24 to 26, **characterized in that** said extracting of a computer network address is initiated every time a new image is displayed on the screen.

28. Method according to claim 27, **characterized in that** said extracted computer network address and/or the image corresponding thereto are only stored if the address is different to previously extracted ones.

29. Method according to anyone of claims 24 to 28, **characterized in that** said step of accessing said computer network comprises the step of choosing one of said computer network addresses stored in said address memory (8).

30. Method according to anyone of claims 24 to 29, **characterized in that** said step of choosing one of said computer network addresses comprises the steps of sequentially displaying said computer network addresses and said corresponding images until one of said addresses is selected or all addresses have been displayed.

31. Method according to anyone of claims 24 to 30. **characterized in that** said computer network is the internet and said computer network address is an internet address.

32. Computer program product, comprising computer program means adapted to perform the method steps as defined in anyone of claims 15 to 31 when being executed on a computer or digital signal processor.

33. Computer readable storage means, storing thereon a computer program product according to claim 32.

## Patentansprüche

1. Videobetrachtungsgerät mit:
- einem Bildspeicher (1) zum Speichern eines Bilds für eine Videoschirmanzeige;
- einer Entnahmeeinrichtung (2) zum Entnehmen einer Computernetzwerkadresse aus einem im Bildspeicher gespeicherten Bild entsprechend vorbestimmten Schlüsselwörtern und zum Ausgeben der entnommenen Computernetzwerkadresse;
- einem Adressenspeicher (8) zum Speichern mindestens einer der von der Entnahmeeinrichtung (2) ausgegebenen entnommenen Computernetzwerkadressen;
- einem Stehbildspeicher (32) zum Speichern des Bilds der Videoschirmanzeige entsprechend der mindestens einen von der Entnahmeeinrichtung (2) ausgegebenen entnommenen Computernetzwerkadresse, wie sie im Adressenspeicher (8) abgespeichert ist;
- und einer Datenstruktur, die die im Adressenspeicher gespeicherte Computernetzwerkadresse mit dem im Stehbildspeicher gespeicherten entsprechenden Bild koppelt.

2. Videobetrachtungsgerät nach Anspruch 1, **dadurch gekennzeichnet, dass** die Entnahmeeinrichtung (2) einen Zeichensensor (6) aufweist, um zu erkennen, ob das im Bildspeicher (1) gespeicherte Bild irgendwelche Zeichen aufweist, und um ein Signal auszugeben, das anzeigt, ob das Bild Zeichen enthält.

3. Videobetrachtungsgerät nach Anspruch 1 oder 2, **dadurch gekennzeichnet, dass** die Entnahmeeinrichtung (2) Folgendes aufweist:
- eine Scaneinrichtung (3) zum Scannen des im Bildspeicher (1) abgespeicherten Bilds und zum Ausgeben eines Stroms von Zeichen, der in Gruppen von Zeichen unterteilt ist; - eine Sucheinrichtung (4) zum Suchen nach den vorbestimmten Schlüsselwörtern im durch die Scaneinrichtung (3) ausgegebenen Zeichenstrom und zum Ausgeben derjenigen Zeichengruppe, die eines der vorbestimmten Schlüsselwörter enthält;
- einen Schlüsselwortspeicher (5) zum Speichern der vorbestimmten Schlüsselwörter, auf die die Sucheinrichtung (4) zugreifen kann.

4. Videobetrachtungsgerät nach Anspruch 3, **dadurch gekennzeichnet, dass** die Entnahmeeinrichtung (2) eine Buchstabierprüfeinrichtung (7) aufweist, um den von der Scaneinrichtung (3) ausgegebenen Zeichenstrom zu prüfen und zu korrigieren, bevor er die Sucheinrichtung (4) erreicht.

5. Videobetrachtungsgerät nach Anspruch 2 und 3 oder 4, **dadurch gekennzeichnet, dass** der Zeichensensor (6) ein Signal ausgibt, das die Zeichen enthaltenden Teile des Bilds anzeigt und die Scaneinrichtung (3) nur die durch den Zeichensensor (6) gekennzeichneten Teile des Bilds scannt.

6. Videobetrachtungsgerät nach einem der Ansprüche 1 bis 5, **gekennzeichnet durch** einen Sender (9) zum Senden einer beliebigen der entnommenen und von der Entnahmeeinrichtung (2) ausgegebenen Computernetzwerkadressen, wobei diese mindestens eine Computernetzwerkadresse im genannten Adressenspeicher (8) gespeichert ist, oder des einer Computernetzwerkadresse entsprechenden Bilds, wie es im Stehbildspeicher gespeichert ist, gemeinsam mit der Computernetzwerkadresse an eine externe Computernetzwerk-Zugriffseinrichtung oder eine externe Speichereinrichtung.

7. Videobetrachtungsgerät nach einem der Ansprüche 1 bis 6, **gekennzeichnet durch** eine Computernetzwerk-Zugriffseinrichtung (10), die mit der Entnahmeeinrichtung (2) und/oder dem Adressenspeicher (8) verbunden ist, um einem Computernetzwerk Zugriff auf mindestens eine der Computernetzwerkseiten zu geben, die **durch** die **durch** die Entnahmeeinrichtung (2) entnommenen Adressen adressiert werden.

8. Videobetrachtungsgerät nach einem der Ansprüche 1 bis 7, **gekennzeichnet durch** eine Entnahmetaste (11), mit der ein Benutzer den Entnahmeprozess einer auf einem Fernsehschirm angezeigten Computernetzwerkadresse **durch** die Entnahmeeinrichtung (2) auslösen kann.

9. Videobetrachtungsgerät nach einem der Ansprüche 1 bis 8, **gekennzeichnet durch** eine Spracherkennungseinrichtung (13), die Wortsequenzen entsprechend vorbestimmten Schlüsselwörtern aus einem dem Fernsehbild entsprechenden Audiosignal entnimmt und einen Zeichenstrom entsprechend den entnommenen Wortsequenzen an die Entnahmeeinrichtung (2) ausgibt.

10. Videobetrachtungsgerät nach einem der Ansprüche 1 bis 9, **dadurch gekennzeichnet, dass** die Entnahmeeinrichtung eine optische Zeichenerkennungseinheit aufweist.

11. Videobetrachtungsgerät nach einem der Ansprüche 1 bis 10, **dadurch gekennzeichnet, dass** das Computernetzwerk das Internet ist und die vorbestimmten Schlüsselwörter "http://www", "ftp://www", "http", "ftp", "www" oder andere Teile von Internetadressen sind.

12. Videobetrachtungsgerät nach einem der Ansprüche 1 bis 11, **dadurch gekennzeichnet, dass** das Computernetzwerk das Internet ist und die Computernetzwerkadresse eine e-mail-Adresse ist.

13. Videobetrachtungsgerät nach einem der Ansprüche 1 bis 12, **dadurch gekennzeichnet, dass** es ein Fernsehempfänger ist.

14. Videobetrachtungsgerät nach einem der Ansprüche 1 bis 13, **dadurch gekennzeichnet, dass** es ein PC mit einer Videoaufnahmekarte ist.

15. Verfahren zum Erzeugen einer Computernetzwerkadresse aus einem Videosignal, mit den folgenden Schritten:
- Zugreifen auf ein in einem Bildspeicher (1) abgespeichertes Videobild;
- Entnehmen einer Computernetzwerkadresse aus dem erfassten Videobild entsprechend vorbestimmten Schlüsselwörtern;
- Ausgeben der entnommenen Computernetzwerkadresse an einen Adressenspeicher (8) zum Speichern zumindest einer der entnommenen Computernetzwerkadressen;
- Abspeichern des im Bildspeicher (9) abgespeicherten Videobilds entsprechend der ausgegebenen, entnommenen Computernetzwerkadresse in einem Stehbildspeicher (32);
- und Bereitstellen einer Datenstruktur, die die im Adressenspeicher abgespeicherte Computernetzwerkadresse mit dem im Stehbildspeicher abgespeicherten entsprechenden'Bild koppelt.

16. Verfahren nach Anspruch 15, **dadurch gekennzeichnet, dass** der Schritt des Entnehmens einer Computernetzwerkadresse die folgenden Schritte aufweist:
- Erfassen, ob irgendwelche Zeichen im im Bildspeicher (1) abgespeicherten Bild enthalten sind oder nicht; und
- Entnehmen aller im abgespeicherten Bild enthaltenen Zeichen, wenn irgendwelche Zeichen in ihm enthalten sind.

17. Verfahren nach Anspruch 15, **dadurch gekennzeichnet, dass** der Schritt des Entnehmens einer Computernetzwerkadresse die folgenden Schritte aufweist:
- Erfassen, ob irgendwelche Zeichen im im Bildspeicher (1) abgespeicherten Bild enthalten sind oder nicht;
- Auswählen nur eines Teils des Bilds, das Zeichen enthält; und
- Entnehmen aller in den ausgewählten Teilen des abgespeicherten Bilds enthaltenen Zeichen.

18. Verfahren nach einem der Ansprüche 15 bis 17, **dadurch gekennzeichnet, dass** der Schritt des Entnehmens einer Computernetzwerkadresse die folgenden Schritte aufweist:
- Scannen des im Bildspeicher (1) abgespeicherten Bilds und Ausgeben eines Zeichenstroms, der entsprechend im Bild angezeigter Wörter in Zeichengruppen unterteilt ist;
- Suchen nach den vorbestimmten Schlüsselwörtern im ausgegebenen Zeichenstrom entsprechend in einem Schlüsselwortspeicher (5) abgespeicherten Schlüsselwörtern; und
- Ausgeben derjenigen Zeichengruppe, die eines der vorbestimmten Schlüsselwörter enthält.

19. Verfahren nach Anspruch 18, **dadurch gekennzeichnet, dass** der Schritt des Suchens nach vorbestimmten Schlüsselwörtern im ausgegebenen Zeichenstrom den Schritt einer Buchstabierprüfung und einer Korrektur des Zeichenstroms enthält.

20. Verfahren nach einem der Ansprüche 15 bis 19, **gekennzeichnet durch** die folgenden Schritte:
- Scannen des dem Videobild entsprechenden Audiosignals, um Wortsequenzen zu erzeugen, die vorbestimmte Schlüsselwörter enthalten;
- Ausgeben eines Zeichenstroms entsprechend den entnommenen Wortsequenzen und
- Vergleichen des Zeichenstroms mit der aus dem Videobild entnommenen Computernetzwerkadresse.

21. Verfahren nach einem der Ansprüche 15 bis 20, **dadurch gekennzeichnet, dass** das Computernetzwerk das Internet ist und die vorbestimmten Schlüsselwörter "http://www", "ftp:// www", "http", "ftp", "www" oder andere Teile von Internetadressen sind.

22. Verfahren nach einem der Ansprüche 15 bis 21, **dadurch gekennzeichnet, dass** das Computernetzwerk das Internet ist und die Computernetzwerkadresse eine e-mail-Adresse ist.

23. Verfahren nach einem der Ansprüche 15 bis 22, **dadurch gekennzeichnet, dass** das Videosignal ein Fernsehsignal ist.

24. Verfahren zum Zugreifen auf ein Computernetzwerk, mit den folgenden Schritten:
- Empfangen eines Rundfunksignals oder eines Videosignals von einem Speicher, in dem mindestens ein Videosignal abgespeichert ist;
- Verarbeiten des Videosignals mit dem Schritt des Abspeicherns eines Videobilds in einem Bildspeicher (1);
- Entnehmen einer Computernetzwerkadresse aus dem im Bildspeicher (1) abgespeicherten Bild entsprechend einem der Ansprüche 15 bis 23;
- Senden der entnommenen Computernetzwerkadresse an eine Computernetzwerk-Zugriffseinrichtung; und
- Zugreifen auf das Computernetzwerk mittels der Computernetzwerk-Zugriffseinrichtung auf Grundlage der gesendeten Computernetzwerkadresse.

25. Verfahren nach Anspruch 24, **gekennzeichnet durch** den Schritt des Sendens des der entnommenen Computernetzwerkadresse entsprechenden Bilds an die Computernetzwerk-Zugriffseinrichtung.

26. Verfahren nach einem der Ansprüche 24 und 25, **dadurch gekennzeichnet, dass** die Entnahme einer Computernetzwerkadresse durch eine Benutzeraktion ausgelöst wird.

27. Verfahren nach einem der Ansprüche 24 bis 26, **dadurch gekennzeichnet, dass** das Entnehmen einer Computernetzwerkadresse jedesmal dann ausgelöst wird, wenn ein neues Bild auf dem Schirm angezeigt wird.

28. Verfahren nach Anspruch 27, **dadurch gekennzeichnet, dass** die entnommene Computernetzwerkadresse und/oder das ihr entsprechende Bild nur dann abgespeichert werden, wenn die Adresse von zuvor entnommenen verschieden ist.

29. Verfahren nach einem der Ansprüche 24 bis 28, **dadurch gekennzeichnet, dass** zum Schritt des Zugreifens auf das Computernetzwerk der Schritt des Auswählens einer der im Adressenspeicher (8) abgespeicherten Computernetzwerkadressen gehört.

30. Verfahren nach einem der Ansprüche 24 bis 29, **dadurch gekennzeichnet, dass** der Schritt des Auswählens einer der Computernetzwerkadressen die Schritte des sequenziellen Anzeigens der Computernetzwerkadressen und der entsprechenden Bilder, bis eine der Adressen ausgewählt wird oder alle Adressen angezeigt wurden, beinhaltet.

31. Verfahren nach einem der Ansprüche 24 bis 30, **dadurch gekennzeichnet, dass** Computernetzwerk das Internet ist und die Computernetzwerkadresse eine Internetadresse ist.

32. Computerprogrammerzeugnis mit einer Computerprogrammeinrichtung, die so ausgebildet ist, dass sie die in einem der Ansprüche 15 bis 31 definierten Verfahrensschritte ausführt, wenn Ausführung auf einem Computer oder einem digitalen Signalprozessor erfolgt.

33. Computerlesbare Speichereinrichtung, die ein Computerprogrammerzeugnis nach Anspruch 32 speichert.

## Revendications

1. Appareil vidéo, comprenant :
une mémoire d'images (1) pour stocker une image d'un écran vidéo ;
un moyen d'extraction (2) pour extraire une adresse réseau d'une image stockée dans ladite mémoire d'images selon des mots clés prédéfinis et pour émettre ladite adresse réseau extraite, une mémoire d'adresses (8) pour stocker au moins une desdites adresses réseau extraites émises par le moyen d'extraction (2), une mémoire d'arrêts sur image (32) pour stocker ladite image de l'écran vidéo correspondant à au moins une adresse réseau émise extraite par ledit moyen d'extraction (2) et stockée dans ladite mémoire d'adresses (8) et une structure de données couplée à ladite adresse réseau stockée dans ladite mémoire d'adresses à l'image correspondante stockée dans ladite mémoire d'arrêts sur image.

2. Appareil vidéo selon la revendication 1, **caractérisé en ce que** ledit moyen d'extraction (2) comprend un détecteur de caractères (6) pour détecter si l'image stockée dans ladite mémoire d'images (1) comprend des caractères et pour émettre un signal indiquant si l'image contient des caractères.

3. Appareil vidéo selon l'une quelconque des revendications 1 ou 2, **caractérisé en ce que** ledit moyen d'extraction (2) comprend :
un scanner (3) pour scanner ladite image stockée dans ladite mémoire d'images (1) et pour émettre une chaîne de caractères divisée en groupes de caractères ;
un moyen de recherche (4) pour rechercher lesdits mots clés prédéfinis dans ladite chaîne de caractères émise par ledit scanner (3) et pour émettre le groupe de caractères contenant l'un desdits mots clés prédéfinis ;
une mémoire de mots clés (5) pour stocker lesdits mots clés prédéfinis étant accessibles par ledit moyen de recherche (4).

4. Appareil vidéo selon la revendication 3, **caractérisé en ce que** ledit moyen d'extraction (2) comprend un vérificateur d'orthographe (7) pour vérifier et corriger ladite chaîne de caractères émise par ledit scanner (3) avant qu'elle parvienne au dit moyen de recherche (4).

5. Appareil vidéo selon l'une quelconque des revendications 2 et 3 ou 4, **caractérisé en ce que** ledit détecteur de caractères (6) émet un signal indiquant quelles parties de l'image contiennent des caractères et ledit scanner (3) ne scanne que les parties de l'image indiquées par ledit détecteur de caractères (6).

6. Appareil vidéo selon l'une quelconque des revendications 1 à 5, **caractérisé en ce qu'**un transmetteur (9) pour transmettre l'une quelconque desdites adresses réseau émises extraites par ledit moyen d'extraction (2), au moins une des adresses réseau étant stockée dans ladite mémoire d'adresses (8) ou ladite image correspondant à une adresse réseau étant stockée dans ladite mémoire d'arrêts sur image avec ladite adresse réseau vers un moyen d'accès réseau externe ou un moyen de stockage externe.

7. Appareil vidéo selon l'une quelconque des revendications 1 à 6, **caractérisé par** un moyen d'accès réseau (10) connecté au dit moyen d'extraction (2) et/ou à ladite mémoire d'adresses (8) pour donner un accès réseau à au moins une des pages réseau adressées par lesdites adresses extraites par ledit moyen d'extraction (2).

8. Appareil vidéo selon l'une quelconque des revendications 1 à 7, **caractérisé par** un bouton d'extraction (11) avec lequel un utilisateur peut lancer le processus d'extraction d'une adresse réseau affichée sur un écran de télévision par le moyen d'extraction (2).

9. Appareil vidéo selon l'une quelconque des revendications 1 à 8, **caractérisé par** un moyen de reconnaissance vocale (13) qui extrait des séquences de mots selon des mots clés prédéfinis à partir d'un signal audio correspondant à l'image TV et émet une chaîne de caractères selon lesdites séquences de mots extraites vers ledit moyen d'extraction (2).

10. Appareil vidéo selon l'une quelconque des revendications 1 à 9, **caractérisé en ce que** ledit moyen d'extraction comprend une unité de reconnaissance de caractères optique.

11. Appareil vidéo selon l'une quelconque des revendications 1 à 10, **caractérisé en ce que** ledit réseau correspond à Internet et lesdits mots clés prédéfinis à « http://www », « ftp://www », « http », « ftp », « www » ou d'autres éléments d'adresses Internet.

12. Appareil vidéo selon l'une quelconque des revendications 1 à 11, **caractérisé en ce que** ledit réseau correspond à Internet et ladite adresse réseau à une adresse électronique.

13. Appareil vidéo selon l'une quelconque des revendications 1 à 12, **caractérisé en ce qu'**il s'agit d'un récepteur de télévision.

14. Appareil vidéo selon l'une quelconque des revendications 1 à 13, **caractérisé en ce qu'**il est compatible avec une carte d'acquisition vidéo.

15. Procédé pour générer une adresse réseau à partir d'un signal vidéo, comprenant les étapes consistant à :
accéder à une image vidéo stockée dans une mémoire d'images (1) ;
extraire une adresse réseau de l'image vidéo selon des mots clés prédéfinis ;
envoyer ladite adresse réseau extraite vers une mémoire d'adresses (8) pour stocker au moins une des adresses réseau extraites émises, stockant ladite image vidéo stockée dans ladite mémoire d'images (9) correspondant à ladite adresse réseau extraite émise dans une mémoire d'arrêt sur image (32) et fournir une structure de données couplée à ladite adresse réseau stockée dans ladite mémoire d'adresses à l'image correspondante dans ladite mémoire d'arrêt sur image.

16. Procédé selon la revendication 15, **caractérisé en ce que** ladite étape d'extraction d'une adresse réseau comprend les étapes consistant à :
détecter si des caractères sont compris dans l'image stockée dans ladite mémoire d'images (1) ; et
extraire tous les caractères compris dans l'image stockée si elle en contient.

17. Procédé selon la revendication 15, **caractérisé en ce que** ladite étape d'extraction d'une adresse réseau comprend les étapes consistant à :
détecter si des caractères sont compris dans l'image stockée dans ladite mémoire d'images (1) ;
sélectionner uniquement la partie de l'image qui comprend les caractères ; et
extraire tous les caractères compris dans les parties sélectionnées de l'image stockée.

18. Procédé selon l'une quelconque des revendications 15 à 17, **caractérisé en ce que** ladite étape d'extraction d'une adresse réseau comprend les étapes consistant à :
scanner ladite image stockée dans ladite mémoire d'images (1) et émettre une chaîne de caractères divisée en groupes de caractères selon les mots affichés dans ladite image ;
rechercher lesdits mots clés prédéfinis dans ladite chaîne de caractères selon les mots clés stockés dans une mémoire de mots clés (5) ; et
émettre le groupe de caractères contenant l'un desdits mots clés prédéfinis.

19. Procédé selon la revendication 18, **caractérisé en ce que** ladite étape de recherche des mots clés prédéfinis dans ladite chaîne de caractères émise comprend les étapes consistant à vérifier et corriger l'orthographe de ladite chaîne de caractères.

20. Procédé selon l'une quelconque des revendications 15 à 19, **caractérisé par** les étapes suivantes consistant à :
scanner le signal audio correspondant à l'image vidéo pour générer des séquences de mots comprenant les mots clés prédéfinis ;
émettre une chaîne de caractères selon lesdites séquences de mots extraites ; et
comparer ladite chaîne de caractères à ladite adresse réseau extraite de l'image vidéo.

21. Procédé selon l'une quelconque des revendications 15 à 20, **caractérisé en ce que** ledit réseau correspond à Internet et lesdits mots clés prédéfinis sont « http://www », « ftp://www », « http », « ftp », « www » ou d'autres éléments d'adresses Internet.

22. Procédé selon l'une quelconque des revendications 15 à 21, **caractérisé en ce que** ledit réseau correspond à Internet et ladite adresse réseau à une adresse électronique.

23. Procédé selon l'une quelconque des revendications 15 à 22, **caractérisé en ce que** ledit signal vidéo est un signal de télévision.

24. Procédé pour accéder à un réseau comprenant les étapes consistant à :
recevoir un signal de diffusion ou un signal vidéo à partir d'un emplacement de stockage dans lequel au moins un signal vidéo est stocké ;
traiter ledit signal vidéo comprenant l'étape consistant à stocker une image vidéo dans une mémoire d'images (1) ;
extraire une adresse réseau d'une image stockée dans ladite mémoire d'image (1) selon l'une quelconque des revendications 15 à 23 ;
transmettre ladite adresse réseau extraite à un moyen d'accès réseau ; et
accéder au dit réseau à l'aide dudit moyen d'accès réseau en fonction de ladite adresse réseau transmise.

25. Procédé selon la revendication 24, **caractérisé par** l'étape suivante consistant à :
transmettre ladite image correspondant à ladite adresse réseau extraite à un moyen d'accès réseau.

26. Procédé selon l'une quelconque des revendications 24 et 25, **caractérisé en ce que** ladite extraction d'une adresse réseau est lancée par une action utilisateur.

27. Procédé selon l'une quelconque des revendications 24 à 26, **caractérisé en ce que** ladite extraction d'une adresse réseau est lancée chaque fois qu'une nouvelle image est affichée à l'écran.

28. Procédé selon la revendication 27, **caractérisé en ce que** ladite adresse réseau extraite et/ou l'image correspondante ne sont stockées que si l'adresse est différente de celles extraites précédemment.

29. Procédé selon l'une quelconque des revendications 24 à 28, **caractérisé en ce que** ladite étape consistant à accéder au dit réseau comprend l'étape consistant à sélectionner l'une des adresses réseau stockées dans ladite mémoire d'adresses (8).

30. Procédé selon l'une quelconque des revendications 24 à 29, **caractérisé en ce que** ladite étape de sélection de l'une desdites adresses réseau comprend les étapes consistant à afficher de façon séquentielle lesdites adresses réseau et lesdites images correspondantes jusqu'à ce que l'une desdites adresses soit sélectionnée ou que toutes les adresses soient affichées.

31. Procédé selon l'une quelconque des revendications 24 à 30, **caractérisé en ce que** ledit réseau correspond à Internet et ladite adresse réseau à une adresse Internet.

32. Produit logiciel, comprenant des moyens logiciels adaptés pour exécuter les étapes du procédé comme défini dans l'une quelconque des revendications 15 à 31 lorsqu'il est exécuté sur un ordinateur ou un processeur de signal numérique.

33. Moyen de stockage lisible par l'ordinateur stockant un produit logiciel selon la revendication 32.
